(19) Europäisches Patentamt
European Patent Office
Office européen des brevets

(11) Veröffentlichungsnummer : **0 361 252 B1**

(12) # EUROPÄISCHE PATENTSCHRIFT

(45) Veröffentlichungstag der Patentschrift :
**19.11.92 Patentblatt 92/47**

(51) Int. Cl.$^5$ : **C09K 5/00**

(21) Anmeldenummer : **89117199.3**

(22) Anmeldetag : **18.09.89**

(54) **Nitrit- und phosphatfreie Kühlstoffmischungen auf Glykolbasis.**

(30) Priorität : **24.09.88 DE 3832592**

(43) Veröffentlichungstag der Anmeldung :
**04.04.90 Patentblatt 90/14**

(45) Bekanntmachung des Hinweises auf die Patenterteilung :
**19.11.92 Patentblatt 92/47**

(84) Benannte Vertragsstaaten :
**AT BE CH DE ES FR GB IT LI NL SE**

(56) Entgegenhaltungen :
**EP-A- 0 283 806**
**DE-A- 1 745 923**
**DE-A- 2 943 963**
**DE-A- 3 440 194**
**DE-B- 1 154 976**
**US-A- 4 455 248**

(73) Patentinhaber : **BASF Aktiengesellschaft**
**Carl-Bosch-Strasse 38**
**W-6700 Ludwigshafen (DE)**

(72) Erfinder : **Oppenlaender, Knut, Dr.**
**Otto-Dill-Strasse 23**
**W-6700 Ludwigshafen (DE)**
Erfinder : **Mohr, Juergen, Dr.**
**Hochgewanne 48**
**W-6718 Gruenstadt (DE)**
Erfinder : **Liebold, Gert, Dr.**
**Hundert Morgen 37**
**W-6803 Edingen-Neckarhausen (DE)**
Erfinder : **Frey, Guenter, Dr.**
**Mainstrasse 13**
**W-6701 Dannstadt-Schauernheim (DE)**

EP 0 361 252 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Nitrit- und phosphatfreie Kühlstoffmischungen auf Glykolbasis

Die Erfindung betrifft nitrit- und phosphatfreie Kühlstoffmischungen auf Glykolbasis mit einem Gehalt an Alkalisalzen von $C_4$- bis $C_{16}$-Alkenylbernsteinsäuren, Silikaten und Silikatstabilisatoren.

Moderne Kühlstoffe für Verbrennungsmotoren enthalten meistens Glykole (Ethylen- oder Propylenglykol) als Hauptkomponente. Im Kühlsystem werden sie mit Wasser verdünnt und sollen neben Frostschutz auch für eine gute Wärmeabfuhr sorgen. Glykol/Wasser-Mischungen sind allerdings bei den hohen Betriebstemperaturen von Verbrennungsmotoren sehr korrosiv, und deswegen müssen die verschiedenen Metalle und deren Legierungen, die im Automobilkühlsystem vorkommen, ausreichend vor Korrosion geschützt werden.

Diese Aufgabe übernehmen die verschiedenen Additive (Korrosionsinhibitoren), welche in Kühlstoffen enthalten sind, z.B. Alkalinitrate, Alkalinitrite, Alkalisilikate, Benzoate, Alkanolamine, Phosphate, Triazole, u.a., neben Natrium- oder Calciumhydroxid und Alkaliboraten, die für eine ausreichende Alkalireserve sorgen, zur Neutralisation von sauren Oxidationsprodukten.

Solche Kühlstoffmischungen sind allgemein bekannt und beispielsweise in Ullmann "Enzyklopädie der technischen Chemie", 4. Auflage, Band 12, Seiten 205 ff. sowie Kirk-Othmer Encyclopedia of Chemical Technology 3rd Ed. 1978, Bd. 3, Seiten 79 ff. beschrieben.

Nitrite gehören zu den wirksamsten Korrosionsinhibitoren gegen Eisen-Korrosion, können allerdings mit primären und sekundären Aminen unter Bildung von hochgiftigen Nitrosaminen reagieren. Dies kann insbesondere dann vorkommen, wenn verschiedene Kühlstoffqualitäten gemischt werden, was z.B. beim Nachfüllen im Autokühler der Fall sein kann.

Probleme kann es auch bei der Verwendung von Phosphaten geben, welche neben Eisen auch Aluminium durch Bildung von Deckschichten schützen können, und zwar dann, wenn das zugemischte Wasser eine hohe Härte aufweist. Die dabei ausfallenden Erdalkaliphosphate können zu Störungen durch z.B. schlechte Wärmezufuhr, Erosion oder sogar zu Kühlerverstopfungen führen.

"Aus der US-A-4 455 248 sind Kühlstoffmischungen bekannt, die als einen wesentlichen Bestandteil Phosphat in relativ großen Mengen enthalten, wobei es jedoch zu den genannten Schwierigkeiten kommen kann."

Die Aufgabe dieser Erfindung war somit Kühlstoffe herzustellen, die amin-, nitrit- und phosphatfrei sind und welche trotzdem die im Kühlsystem vorkommenden metallischen Werkstoffe ausreichend schützen.

Aus der DE-A1 3 440 194 sind Kühlflüssigkeiten bekannt, die zur Korrosionsstabilisierung Organosilan-Silikat-Copolymere enthalten. Die dort beschriebenen Kühlstoffmischungen benötigen jedoch Na-nitrit, das die oben angegebenen Nachteile hat.

In der DE-C2 2 943 963 ist weiter die Verwendung von Alkanolaminsalzen von $C_8$- und $C_9$-Alkenylbernsteinsäuren als wasserlösliche Korrosionsinhibitoren bekannt. Aus den vorstehend genannten Gründen ist jedoch der Einsatz von Aminsalzen in Kühlstoffmischungen problematisch und in der Praxis ausdrücklich nicht erwünscht.

Es wurde nun überraschenderweise gefunden, daß man auf Phosphat und Nitritzusätze verzichten kann und die Formulierungen einen sehr wirksamen Korrosionsschutz aufweisen, wenn sie enthalten neben Ethylen- und/oder Propylenglykol und Wasser

a) 1 - 5 Gew.% der Alkalisalze von $C_4$- bis $C_{16}$-Alkenylbernsteinsäuren,

b) 0,1 - 1 Gew.% Silikate der allgemeinen Formel II

$$(MO)_q SiO_{\frac{4-q}{2}} \qquad (II),$$

in der

M ein Alkalimetall und
q die Werte 0,4 bis 4
bedeutet,

c) 0,01 - 0,2 Gew.% eines Silikatstabilisators

d) 0 - 0,5 Gew.% Alkalinitrate

e) 0,05 - 0,2 Gew.% Benzo- oder Tolutriazol

f) 0,5 - 2 Gew.% Borax

g) 0,05 - 1 Gew.% NaOH,

h) 0,01 - 0,15 Gew.% einer Oligo- oder Polycarbonsäure mit einem Molgewicht von 1 000 bis 100 000, wobei alle Prozentangaben auf das in der Kühlstoffmischung enthaltene Glykol bezogen sind.

Unter Kühlstoffmischung im Sinne der Erfindung ist in der Regel die noch nicht mit Wasser vermischte silikathaltige Formulierung auf Glykolbasis zu verstehen.

Die erfindungsgemäß zu verwendenden Alkalisalze von $C_4$- bis $C_{16}$-Alkenylbernsteinsäuren werden in an sich bekannter Weise erhalten, z.B. indem man in erster Stufe Maleinsäureanhydrid mit Alkenen mit 4 bis 16 C-Atomen umsetzt, z.B. bei Temperaturen von 120 bis 250°C und Drücken von 1 bis 20 bar, und nach beendeter Umsetzung die nicht umgesetzten Ausgangsprodukte zweckmäßig durch Destillation abtrennt. Die entstandenen Alkenylbernsteinsäureanhydride werden anschließend durch Umsetzung mit einer basischen Alkalimetall-Verbindung, z.B. den Hydroxiden, Carbonaten oder Alkoholaten, in die Alkalisalze übergeführt. Als Alkene mit 4 bis 16 C-Atomen für die Umsetzung mit Maleinsäureanhydrid kommen z.B. in Betracht 1-Buten, Isobuten, 2-Buten, 1-Penten, 2-Methyl-1-buten, 1-Hexen, 1-Hepten, 1-Octen sowie vorzugsweise die durch Oligomerisierung von Propylen erhältlichen $C_6$-, $C_9$-, $C_{12}$- und $C_{15}$-Alkene und die durch Oligomerisierung von $C_4$-Alkenen, wie 1-Buten, Isobuten, erhältlichen $C_8$-, $C_{12}$- und $C_{16}$-Alkene, wobei die $C_8$-, $C_9$- und $C_{12}$-Alkene bevorzugt werden.

Als Alkalisalze der $C_4$- bis $C_{16}$-Alkenylbernsteinsäuren kommen die Lithium-, Natrium-, Kalium-, Rubidium-, Cäsiumsalze in Betracht, wobei die Kalium- und insbesondere die Natriumsalze bevorzugt werden.

Als Silikate der allgemeinen Formel II kommen vor allem die in DE-A1 3 440 194 beschriebenen Silikate in Betracht, weshalb auf diese Publikation und deren Angaben Bezug genommen wird. Als Alkalimetall M kommt vor allem Kalium und insbesondere Natrium in Betracht.

Diese Silikate werden in an sich bekannter Weise erhalten, wie dies z.B. in J.S. Falcone jr. in Kirk Othmer's Encyclopaedia of Chemical Technology, 3rd Edition, Bd. 20, S. 864 beschrieben ist und worauf Bezug genommen wird.

Als Silikatstabilisatoren (c) kommen beliebige wirksame Verbindungen in Betracht, z.B Stabilisatoren wie sie in DE-A- 2 912 430 oder EP 0061694 beschrieben sind. Bevorzugt verwendet man als Stabilisatoren Phosphorsilizium-Verbindungen, wie sie aus der DE-A1 3 440 194 bekannt sind. Diese Verbindungen reagieren mit den Silikaten der Formel II unter Bildung von Organosilan-Silikat-Copolymeren.

Als geeignete organische Phosphor-Silizium-Verbindungen kommen im einzelnen solche der allgemeinen Formel IV

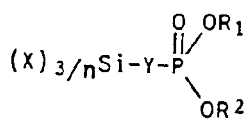

(IV)

in Betracht, in der

Y einen zweiwertigen aliphatischen oder cycloaliphatischen Rest mit 1 bis 10 Kohlenstoffatomen oder eine Phenylenalkylengruppe mit 7 bis 10 Kohlenstoffatomen bedeutet und

n die Werte 1 oder 2 annehmen kann, wobei, wenn n = 1 ist, X für eine $OR^3$-Gruppe, in der $R^3$ eine geradkettige, verzweigte oder cyclische Alkylkette mit 1 bis 13 Kohlenstoffatomen, die gegebenenfalls durch Sauerstoffatome unterbrochen sein kann, oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoff unterbrochen sein kann, oder eine Aryl-bzw. Aralkylgruppe mit bis zu 20 Kohlenstoffatomen stehen, und wenn n = 2 ist, X ein Sauerstoffatom und $R^1$ ein Alkalimetall bedeuten und $R^2$ die oben genannte Bedeutung hat.

Die organischen Phosphor-Silicium-Verbindungen der oben genannten Formel IV (z.B. mit n = 1) können nach bekannten Methoden hergestellt werden:

a) Addition von Dialkylphosphiten an Alkenyltrialkoxysilane in Gegenwart von Radikalbildnern oder

b) Umsetzung von Di- oder Trialkylphosphiten mit Halogenalkyltrialkoxysilanen.

Einige Vertreter dieser Verbindungsklasse sind bekannt und beispielsweise in J. Org. Chem. 25, 1191 (1960), DE-A2 2 219 983 und DE-A2 2 304 544 (Methode a)) sowie US-A 3 780 127 und US-A 3 816 550 (Methode b)) beschrieben. Weitere Verbindungen finden sich auch in dem Buch "Organosilicon Derivatives of Phosphorus and Sulfur" von S.N. Borisov, M.G. Voronkov und E.Ya. Lukavits, Plenum Press, New York-London 1971, Seite 94 ff..

Der Rest Y in der oben genannten Formel IV stellt, wie oben ausgeführt, einen zweiwertigen aliphatischen oder cycloaliphatischen Rest mit 1 bis 10 Kohlenstoffatomen oder eine Phenylenalkylengruppe mit 7 bis 10 Kohlenstoffatomen dar.

Zweiwertige aliphatische Reste sind geradkettige oder verzweigte Alkylen- oder Alkenylengruppen, z.B. die Methylen-, Ethylen-, Propylen-, Butylen-, Hexylen-, Methylpropylen-, Butenylen- oder Hexenylengruppe.

Als cycloaliphatischer Rest ist beispielsweise die Ethylencyclohexylen- oder Propylencyclohexylengruppe zu nennen.

Phenylalkylengruppen sind z.B. die Phenylenmethylen- oder Phenylenethylengruppe.

Die bevorzugte Bedeutung von Y sind geradkettige oder verzweigte Alkylengruppen mit 1 bis 6 Kohlenstoffatomen, wobei die Ethylen-, Propylen-, Butylen- und Isobutylengruppe besonders bevorzugt sind.

Die bevorzugte Bedeutung von $R^3$ in der Formel IV (n = 1) sind Alkylgruppen mit 1 bis 4 Kohlenstoffatomen.

$R^1$ und $R^2$ in Formel IV (n = 1) stehen vorzugsweise ebenfalls für Alkylgruppen mit 1 bis 4 Kohlenstoffatomen.

Wenn n = 2 ist, bedeutet $R^1$ vorzugsweise Natrium oder Kalium.

Zu den organischen Phosphor-Silicium-Verbindungen der Formel IV mit n = 2 gelangt man über die oben beschriebenen Phosphor-Silicium-Verbindungen der Formel IV mit n = 1, die das Strukturelement $(R^3O)_3Si$- aufweisen. Man erhält sie durch Umsetzung in wäßriger Alkalihydroxidlösung bei einer Temperatur von 70 bis 100°C über einen Zeitraum von 10 bis 20 Stunden. Bei diesen Verbindungen handelt es sich um Phosphonoalkylsiloxane.

Die durch Reaktion der organischen Phosphor-Silicium-Verbindungen mit den Silikaten entstehenden Organosilan-Silikat-Copolymere können entweder in situ bei der Herstellung der Kühlstoff-Formulierung durch Reaktion der dort vorhandenen Alkalisilikate mit den organischen Phosphor-Silicium-Verbindung gemäß Formel IV im Gewichtsverhältnis von 1:1 bis 10:1, vorzugsweise 2:1 bis 8:1 gebildet werden oder lassen sich auch vorher separat herstellen.

In diesem Fall wird das Alkalisilikat mit der organischen Phosphor-Silicium-Verbindung gemäß Formel IV in den entspechenden Mengen versetzt und bei einer Temperatur von 30 bis 150°C, vorzugsweise 30 bis 80°C, in Glykol oder Wasser oder auch in einer Glykol-Wasser-Mischung über einen Zeitraum von 5 bis 10 Stunden gerührt. Das resultierende Organosilan-Silikat-Copolymere, dessen Silikat-Anteil im Bereich von ca. 50 bis 90 Gew.%, vorzugsweise 65 bis 90 Gew.%, jeweils bezogen auf die Summe der beiden Reaktionspartner, liegt, kann dann zur Kühlstoffmischung, die die übrigen Komponenten enthält, gegeben werden.

Die Kühlstoffmischung kann dabei weitere an sich bekannte Korrosionsinhibitoren beispielsweise Borate, Nitrate oder Benzoate, Benzo- oder Tolutriazol sowie Antischaummittel oder andere Hilfsmittel enthalten (vgl. Ullmann, loc. cit.).

Als Oligo- oder Polycarbonsäuren, die den Kühlstoffmischungen in Mengen von 0,01 bis 0,15 Gew.%, vorzugsweise 0,05 bis 0,1 Gew.%, bezogen auf das in der Kühlstoffmischung enthaltene Glykol, zugesetzt werden, kommen beispielsweise Polyacrylsäure, Oligomaleinsäure, Maleinsäure/Acrylsäure-Copolymere in Betracht. Die Oligo- oder Polycarbonsäuren weisen ein Molgewicht von 1 000 bis 100 000, vorzugsweise 2 000 bis 10 000, auf.

Zur Bereitung der Kühlmedien versetzt man die erfindungsgemäßen Kühlstoffmischungen mit Wasser und stellt so zweckmäßig 20 bis 50 vol.%ige wäßrige Lösungen her.

Die erfindungsgemäßen Kühlstoffmischungen bewirken sehr geringe Korrosion von Aluminium und zeichnen sich sowohl in unverdünntem Zustand als auch in wäßriger Lösung durch eine vorteilhafte Silikat-Stabilität aus.

Die nachfolgenden Beispiele sollen die Erfindung näher erläutern.

Beispiel 1

896 g Diisobuten, das hauptsächlich aus folgenden zwei Isomeren besteht

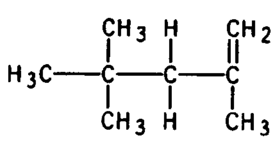

und

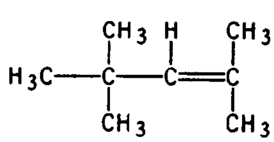

,

und 392 g Maleinsäureanhydrid werden 4 Stunden bei 190°C gerührt. Nicht umgesetzte Ausgangsprodukte werden abdestilliert. Das Reaktionsprodukt (hauptsächlich Octenylbernsteinsäureanhydrid) wird ebenfalls abdestilliert. Ausbeute: 82% der Theorie. Es wird anschließend mit wäßriger Natronlauge in das Di-Natrium-Salz übergeführt.

Beispiele 2 bis 5

Man verfährt wie in Beispiel 1 beschrieben, wobei jedoch anstelle von Diisobuten die in der folgenden Tabelle angegebenen Alkene mit Maleinsäureanhydrid umgesetzt werden, wobei die Di-Natriumsalze der in der letzten Spalte der nachstehend aufgeführten Tabelle angegebenen Alkenylbernsteinsäuren erhalten werden:

| | Eingesetztes Alken | Di-Natriumsalz der |
|---|---|---|
| Beispiel 2 | Isobuten | $C_4$-Alkenylbernsteinsäure |
| Beispiel 3 | Triisobuten | $C_{12}$-Alkenylbernsteinsäure |
| Beispiel 4 | Tripropylen | $C_9$-Alkenylbernsteinsäure |
| Beispiel 5 | Tri-n-buten | $C_{12}$-Alkenylbernsteinsäure |

Beispiel 6

Man bereitet eine Mischung aus

2,10 % Di-Na-Salz der Octenylbernsteinsäure gemäß Beispiel 1

0,15 % $Na_2SiO_3.5H_2O$

0,026 %

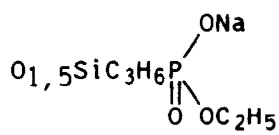

0,10 % Tolutriazol

0, 155 % NaOH 50%ig

0,25 % $NaNO_3$

0,075 % Polyacrylsäure (Molgewicht 4 000)

Rest Monoethylenglykol.

Beispiele 7 bis 10

Man verfährt wie in Beispiel 6 beschrieben, wobei jedoch in der jeweiligen Mischung anstelle des Di-Na-Salzes der Octenylbernsteinsäure gemäß Beispiel 1 die Di-Na-Salze der in der letzten Spalte der nachstehend aufgeführten Tabelle angegebenen Alkenylbernsteinsäuren eingesetzt werden:

| Beispiel | Di-Na-Salz der |
|---|---|
| 7 | $C_4$-Alkenylbernsteinsäure gemäß Beispiel 2 |
| 8 | $C_{12}$-Alkenylbernsteinsäure gemäß Beispiel 3 |
| 9 | $C_9$-Alkenylbernsteinsäure gemäß Beispiel 4 |
| 10 | $C_{12}$-Alkenylbernsteinsäure gemäß Beispiel 5 |

Anwendungstest

Im ASTM-Test 1384 (Glasware-Test) wurden folgende Formulierungen geprüft:

A = 25 vol.%ige wäßrige Lösung der Mischung von Beispiel 6

B = 25 vol.%ige wäßrige Lösung der Mischung von Beispiel 7

C = 25 vol.%ige wäßrige Lösung der Mischung von Beispiel 8

D = 25 vol.%ige wäßrige Lösung der Mischung von Beispiel 9

E = 25 vol.%ige wäßrige Lösung der Mischung von Beispiel 10

In der Tabelle 1 werden die gemessenen Gewichtszunahmen oder -abnahmen (in $g/m^2$) gemäß ASTM 1384 angegeben.

Tabelle 1

| | Versuch A | Versuch B | Versuch C | Versuch D | Versuch E |
|---|---|---|---|---|---|
| Kupfer | - 0,02 | 0,02 | - 0,03 | - 0,02 | - 0,05 |
| Weichlot | - 0,03 | 0,00 | - 0,04 | - 0,02 | 0,00 |
| Messing | - 0,07 | 0,04 | - 0,07 | - 0,01 | - 0,01 |
| Stahl | - 0,01 | - 0,02 | - 0,01 | - 0,01 | 0,00 |
| Grauguß | 0,00 | - 1,70 | - 0,01 | - 0,01 | - 0,02 |
| Gußaluminium | - 0,08 | - 0,39 | - 0,07 | - 0,03 | - 0,05 |

Der Tabelle 1 ist zu entnehmen, daß die erfindungsgemäßen Formulierungen einen hervorragenden Schutz sowohl bei Grauguß als auch bei Gußaluminium bieten.

**Patentansprüche**

1. Kühlstoffmischungen auf Glykolbasis, die frei von Nitriten und Phosphaten sind, gekennzeichnet durch einen Gehalt an

   a) 1 - 5 Gew.% der Alkalisalze von $C_4$- bis $C_{16}$-Alkenylbernsteinsäuren,

   b) 0,1 - 1 Gew.% Silikate der allgemeinen Formel II

   $$(MO)_qSiO_{\frac{4-q}{2}} \qquad (II),$$

   in der M ein Alkalimetall und q die Werte 0,4 bis 4 bedeutet,

   c) 0,01 - 0,2 Gew.% eines Silikatstabilisators

   d) 0- 0,5 Gew.% Alkalinitrate

   e) 0,05 - 0,2 Gew.% Benzo- oder Tolutriazol

   f) 0,5 - 2 Gew.% Borax

   g) 0,05 - 1 Gew.% NaOH,

   h) 0,01 - 0,15 Gew.% einer Oligo- oder Polycarbonsäure mit einem Molgewicht von 1 000 bis 100 000,

   wobei alle Prozentangaben auf das in der Kühlstoffmischung enthaltene Glykol bezogen sind.

2. Kühlstoffmischung gemäß Anspruch 1, dadurch gekennzeichnet, daß sie als Komponente (a) die Natriumsalze der $C_8$-, $C_9$- und/oder $C_{12}$-Alkenylbernsteinsäure oder deren Gemisch enthält.

3. Kühlstoffmischung gemäß Anspruch 1, dadurch gekennzeichnet, daß sie als Komponente (c) Silikatstabilisatoren enthält der Formel

   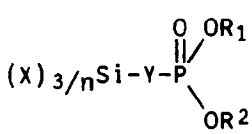

   (IV),

   in der

   Y einen zweiwertigen aliphatischen oder cycloaliphatischen Rest mit 1 bis 10 Kohlenstoffatomen oder eine Phenylenalkylengruppe mit 7 bis 10 Kohlenstoffatomen bedeutet und

   n die Werte 1 oder 2 annehmen kann, wobei, wenn n = 1 ist, X für eine $OR^3$-Gruppe, in der $R^3$ eine geradkettige, verzweigte oder cyclische Alkylkette mit 1 bis 13 Kohlenstoffatomen, die gegebenenfalls durch Sauerstoffatome unterbrochen sein kann, oder einen Acylrest mit bis zu 9 Kohlenstoffatomen bedeutet, und $R^1$ und $R^2$ gleich oder verschieden sind und für eine geradkettige, verzweigte oder cyclische Alkylgruppe mit 1 bis 13 Kohlenstoffatomen, die gegebenenfalls durch Sauerstoff unterbrochen sein kann,

oder eine Aryl- bzw. Aralkylgruppe mit bis zu 20 Kohlenstoffatomen stehen, und, wenn n = 2 ist, X ein Sauerstoffatom und $R^1$ ein Alkalimetall bedeuten und $R^2$ die oben genannte Bedeutung hat.

## Claims

1. An antifreeze mixture based on glycol which is free of nitrite and phosphate, comprising
   a) 1 - 5% by weight of an alkali metal salt of a $C_4$-$C_{16}$-alkenylsuccinic acid,
   b) 0.1 - 1% by weight of a silicate of the general formula II

$$(MO)_q SiO_{\frac{4-q}{2}} \qquad (II)$$

   where
   M is an alkali metal and
   q is from 0.4 to 4,
   c) 0.01 - 0.2% by weight of a silicate stabilizer,
   d) 0 - 0.5% by weight of an alkali metal nitrate,
   e) 0.05 - 0.2% by weight of benzotriazole or tolutriazole,
   f) 0.5 - 2% by weight of borax,
   g) 0.05 - 1% by weight of NaOH,
   h) 0.01 - 0.15% by weight of an oligo- or polycarboxylic acid having a molecular weight of 1000 to 100,000,
   all the percentages being based on the glycol present in the antifreeze mixture.

2. An antifreeze mixture as claimed in claim 1, wherein component (a) is the sodium salt of a $C_8$-, $C_9$- or $C_{12}$-alkenylsuccinic acid or a mixture thereof.

3. An antifreeze mixture as claimed in claim 1, wherein component (c) is a silicate stabilizer of the formula

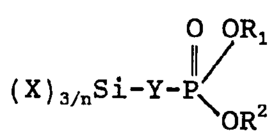

(IV)

where

Y is a divalent aliphatic or cycloaliphatic radical of from 1 to 10 carbon atoms or a phenylenealkylene group of from 7 to 10 carbon atoms and

n is 1 or 2, if the former, ie. if n = 1, X being an $OR^3$ group where $R^3$ is straight-chain, branched or cyclic alkyl of from 1 to 13 carbon atoms which may be interrupted by oxygen atoms, or acyl of up to 9 carbon atoms, and $R^1$ and $R^2$, which are identical of different, each being a straight-chain or branched or cyclic alkyl of from 1 to 13 carbon atoms which may be interrupted by oxygen, or aryl or aralkyl of up to 20 carbon atoms, or if the latter, ie. if n = 2, X being oxygen, $R^1$ being an alkali metal and $R^2$ being as defined above.

## Revendications

1. Mélanges de refroidissement à base de glycol, qui sont exempts de nitrites et de phosphates, caractérisés en ce qu'ils contiennent
   a) de 1 à 5% en poids de sels alcalins d'acides (alcényl en $C_4$-$C_{16}$)succiniques,
   b) de 0,1 à 1% en poids de silicates de formule générale II

$$(MO)_q SiO_{\frac{4-q}{2}} \qquad (II)$$

dans laquelle M représente un métal alcalin et q est un nombre de 0,4 à 4,

c) de 0,01 à 0,2% en poids d'un stabilisant de type silicate,

d) de 0 à 0,5% en poids de nitrates alcalins,

e) de 0,05 à 0,2% en poids de benzo- ou tolutriazole,

f) de 0,5 à 2% en poids de borax,

g) de 0,05 à 1% en poids de NaOH,

h) de 0,01 à 0,15% en poids d'un acide oligo- ou polycarboxylique ayant un poids moléculaire de 1000 à 100 000,

tous les pourcentages se rapportant au glycol contenu dans le mélange de refroidissement.

**2.** Mélange de refroidissement selon la revendication 1, caractérisé en ce qu'il contient, en tant que composant (a), les sels sodiques des acides (alcényl en $C_8$-, $C_9$- et/ou $C_{12}$)succiniques ou des mélanges de ceux-ci.

**3.** Mélange de refroidissement selon la revendication 1, caractérisé en ce qu'il contient, en tant que composant (c), des stabilisants de type silicate de formule

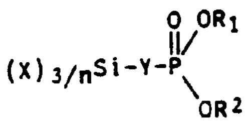

(IV),

dans laquelle

Y représente un reste aliphatique ou cycloaliphatique bivalent à 1-10 atomes de carbone ou un groupement phénylènealkylène à 7-10 atomes de carbone et

n peut prendre la valeur 1 ou 2: lorsque n = 1, X est mis pour un groupement $OR^3$, dans lequel $R^3$ représente une chaîne alkyle droite, ramifiée ou cyclique à 1-13 atomes de carbone, qui peut être éventuellement interrompue par des atomes d'oxygène, ou un reste acyle renfermant jusqu'à 9 atomes de carbone, et $R^1$ et $R^2$ sont identiques ou différents et sont mis chacun pour un groupement alkyle à chaîne droite, ramifiée ou cyclique à 1-13 atomes de carbone, qui peut être éventuellement interrompu par des atomes d'oxygène, ou pour un groupement aryle ou aralkyle renfermant jusqu'à 20 atomes de carbone, et, lorsque n = 2, X représente un atome d'oxygène, $R^1$ représente un métal alcalin et $R^2$ a la signification indiquée ci-dessus.